# FASCICULE DE BREVET EUROPEEN

(11) **EP 3 474 085 B1**
(45) Date de publication et mention de la délivrance du brevet: **25.03.2020**
(21) Numéro de dépôt: 17197847.1
(22) Date de dépôt: 23.10.2017
(51) Int. Cl.: G04C 3/00

(54) **DISPOSITIF DE COMMANDE MUNI D'UN MODULE DE DÉTECTION DE LA POSITION AXIALE DE SA TIGE, ET PIÈCE D'HORLOGERIE COMPRENANT UN TEL DISPOSITIF DE COMMANDE**
STEUERVORRICHTUNG, DIE MIT EINEM MODUL ZUR DETEKTION DER AXIALPOSITION IHRES FEDERSTEGS AUSGESTATTET IST, UND UHR, DIE EINE SOLCHE STEUERVORRICHTUNG UMFASST
CONTROL DEVICE PROVIDED WITH A MODULE FOR DETECTING THE AXIAL POSITION OF THE STEM THEREOF, AND TIMEPIECE COMPRISING SUCH A CONTROL DEVICE

(43) Date de publication de la demande: 24.04.2019
(73) Titulaire: ETA SA Manufacture Horlogère Suisse, 2540 Grenchen (CH)
(72) Inventeur: ZANESCO, Vittorio, 2000 Neuchâtel (CH); CANONICA, Michael, 2072 St-Blaise (CH); MÜLLER, Roger, 3322 Schönbühl (CH)
(74) Mandataire: ICB SA

(56) Documents cités:
- US-A- 4 034 551
- US-A- 4 536 095
- US-B1- 6 896 403

## Description

### Domaine technique

L'invention se rapporte à un dispositif de commande comprenant une tige actionnable par un utilisateur et un module du type électrique pour détecter la position axiale de cette tige, laquelle forme par exemple une couronne-poussoir d'une pièce d'horlogerie. En particulier, le module de détection est agencé pour pouvoir aussi détecter un mouvement de rotation de la tige.

### Arrière-plan technologique

Dans les pièces d'horlogerie ayant des couronnes-poussoirs du type électronique associées à des modules électriques de détection de la position axiale de leur tige, ces modules électriques sont généralement encombrants et permettent souvent la détection de seulement deux positions : une position 'de repos' qui est stable et une position terminale pour une fonction poussoir, également nommée 'position de clic'. Les modules de détection connus ont généralement une taille importante et ne peuvent souvent détecter que deux positions axiales de la tige. Un autre inconvénient des modules de détection connus est qu'ils possèdent généralement des moyens de rappel de la tige assez faibles pour assurer le retour de la tige suite à une activation de la fonction poussoir.

Le document US 6,896,403 propose un dispositif électrique complexe pour détecter la position d'une tige de commande. Le dispositif comprend quatre doigts conducteurs élastiques qui sont agencés de manière que leurs extrémités respectives puissent être en contact avec des plages de contact correspondantes lorsqu'elles sont contraintes par la tige. La tige comprend un profil axial avec une partie annulaire saillante, dans la région des contacts électriques, qui vient sélectivement appuyer sur un des doigts en fonction de la position axiale de la tige, pour établir successivement un contact différent et donc une fonction différente. Un tel dispositif électronique permet d'avoir plusieurs positions détectables de la tige électronique, mais son mécanisme est fragile notamment car les doigts élastiques sont sollicités selon la direction axiale de la tige, et donc transversalement à la direction prévue pour la fonction d'interrupteur.

Le document US 4,536,095 décrit un autre dispositif électrique relativement complexe pour détecter diverses position d'une tige. A cet effet, le dispositif électrique comprend un ressort en forme de U situé dans un plan transversal à l'axe de la tige et traversé par cette tige. La tige est tronquée pour moitié sur sa longueur et présente en outre un profil pour pouvoir écarter sélectivement les deux jambes du ressort de manière à établir un premier contact ou un deuxième contact avec deux plages de contact sur un PCB. De plus, la tige peut actionner par son extrémité une structure conductrice en forme de T de sorte à activer d'autres fonctions. Ainsi, ce dispositif électrique permet la sélection de plusieurs fonctions selon la position de la tige, mais il est complexe et comporte deux ressorts fonctionnant indépendamment l'un de l'autre.

Le document US 4,034,551 propose un dispositif électrique de détection de la position d'une tige relativement simple et classique. Un doigt est actionné par la tige entre deux goupilles de contact, avec une position intermédiaire prévue sans contact. Ainsi, trois positions de la tige peuvent être détectées.

### Résumé de l'invention

Le but de la présente invention est de surmonter au moins quelques inconvénients identifiés ci-dessus en lien avec les modules de détection du type électrique qui sont agencés notamment dans des pièces d'horlogerie pour détecter au moins la position axiale d'une tige d'un dispositif de commande.

A cet effet, l'invention a pour objet un dispositif de commande agencé pour détecter plusieurs positions axiales de sa tige selon la revendication 1.

Le module de détection selon l'invention a été développé dans le but de réduire son encombrement, afin de rendre son intégration possible dans les plus petits calibres (pour montres) tout en permettant la détection de trois positions axiales de la tige. Dans un souci de gain de place, la lame sert de contacteur électrique pour la détection de la position axiale en plus d'une fonction de ressort de rappel pour la position de clic. De plus, le design du module de détection permet une méthode d'emboitage traditionnelle car il peut être complètement intégré au mouvement d'une pièce d'horlogerie.

L'invention a également pour objet une pièce d'horlogerie comprenant le dispositif de commande susmentionné.

D'autres aspects de la présente invention se trouvent dans les revendications dépendantes.

### Brève description des figures

L'invention sera décrite ci-après de manière plus détaillée à l'aide des dessins annexés, donnés à titre d'exemples nullement limitatifs, dans lesquels :
- La figure 1 est une vue en perspective montrant des éléments principaux du module de détection de la position axiale d'une tige de commande selon un mode de réalisation de la présente invention ;
- La figure 2 est une vue en coupe horizontale du dispositif de commande selon l'invention, illustrant les éléments principaux de la figure 1 placé à l'intérieur d'un bâti du module de détection ;
- La figure 3 est une vue isométrique illustrant la tige prise entre deux ressorts positionnement de la tige et la lame élastique qui lui est associée ;
- La figure 4 est une vue isométrique du dispositif de commande de la figure 2 ; et
- Les figures 5a, 5b et 5c sont des vues partielles de dessus illustrant trois configurations différentes du dispositif de commande qui correspondent respectivement à trois positions différentes de la tige détectées par le module de détection.

### Description détaillée de l'invention

En se reportant aux figures, un mode de réalisation conforme à la présente invention sera maintenant expliqué plus en détail. Ce mode de réalisation sera décrit dans le contexte d'une pièce d'horlogerie. Dans la présente description détaillée, la pièce horlogerie est en particulier une montre-bracelet, dénommée ci-après simplement montre, mais la présente invention n'est pas limitée aux montres portées au poignet d'un utilisateur. En effet, la présente invention peut être appliquée à n'importe quel type de pièce d'horlogerie électronique ou à d'autres dispositifs électroniques portables munis d'un dispositif de commande d'au moins certaines de leurs fonctions.

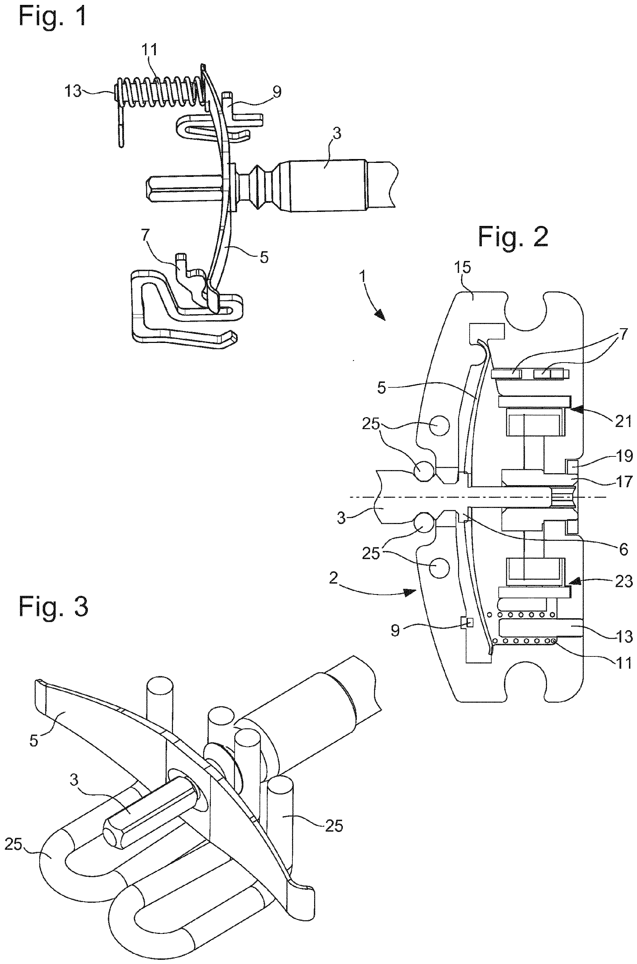

La figure 1 présente en perspective les éléments principaux du système de détection électrique de la position axiale d'une tige 3 d'une couronne-poussoir d'une montre. Ce système de détection comprend une lame conductrice élastique courbée 5, également dénommée 'arbalète' de par sa forme. La lame 5 présente donc dans une vue de dessus sensiblement une forme d'arbalète lors qu'elle n'est soumise à aucune force externe. Dans cet exemple, la lame est fabriquée d'un acier 'maraging', qui est un alliage connu pour son importante résistance et dureté, tout en gardant une bonne ductilité. La lame 5 comprend une première extrémité, une deuxième extrémité opposée à la première extrémité, et une partie centrale entre la première extrémité at la deuxième extrémité. Entre la partie centrale et la première extrémité, la lame 5 comprend une première partie intermédiaire alors qu'entre la partie centrale et la deuxième extrémité, la lame 5 comprend une deuxième partie intermédiaire.

Un trou traversant est prévu dans la partie centrale de la lame 5 pour que la partie terminale de la tige 3 puisse traverser partiellement la lame, laquelle est en butée contre un épaulement 6 prévu sur la tige 3, tel que représenté à la figure 2. La tige 3 définit un axe longitudinal de manière que la lame est agencée avec sa partie centrale sensiblement perpendiculaire à cet axe longitudinal pour qu'elle soit entraînée axialement par cette tige lors de déplacements axiaux en direction d'une position terminale. La lame 5 est agencée dans le module de détection de manière que sa partie centrale dans un état non déformé est située, en projection sur l'axe longitudinal de la tige 3, du côté de la position tirée relativement à ses première et deuxième extrémités. Avantageusement, la lame conductrice présente une section transversale variable qui diminue depuis son centre, c'est-à-dire la partie centrale, en direction de ses deux extrémités. L'avantage de cette section non-constante sera expliquée plus loin.

Le système de détection comprend aussi un premier contact électrique 7, situé sensiblement à la première extrémité de la lame 5, et un deuxième contact électrique 9, situé sensiblement à la deuxième extrémité de la lame 5, qui sont agencés pour venir sélectivement en contact avec la lame, comme expliqué plus loin. Le premier contact électrique 7 est prévu d'un premier côté de la lame, alors que le deuxième contact électrique 9 est prévu d'un deuxième côté de la lame 5, c'est-à-dire du côté opposé au premier côté. Un ressort de rappel 11, monté autour d'un élément de guidage 13 tel qu'une goupille, est prévu en appui contre le premier côté de la lame du côté de la deuxième extrémité de cette lame. Il est agencé pour être en contact permanent avec la lame. Le ressort de rappel 11 a deux fonctions, à savoir une fonction mécanique et une fonction électrique pour imposer un potentiel électrique à la lame 5. Par exemple, la lame 5 peut être mise à la masse par le biais du ressort de rappel. La lame 5, les premier et deuxième contacts électriques 7, 9 et le ressort de rappel 11 sont donc tous des conducteurs électriques. Ils peuvent être constitués d'un matériau conducteur ou avoir une couche extérieure conductrice. Par exemple, le ressort de rappel 11 est conçu en acier.

La figure 2 est une vue en coupe horizontale montrant le dispositif de commande 1 selon l'invention avec les éléments du système de détection susmentionné à l'intérieur d'un bâti 15 pour former ensemble un module de détection 2. Ce module de détection comprend deux capteurs optiques 21 et 23 associé à un pignon coulant 17 entraîné en rotation par la partie terminale, de section non circulaire, de la tige 3. Le pignon coulant 17 est retenu axialement par une rondelle 19 et il présente des facettes réfléchissantes. Un tel système de détection de la rotation d'une tige ne sera pas décrit ici plus en détails. Il est connu de l'homme du métier. On notera qu'un système de détection magnétique ou capacitif peut également être prévu. Dans le cas d'un système magnétique, le pignon coulant porte un aimant.

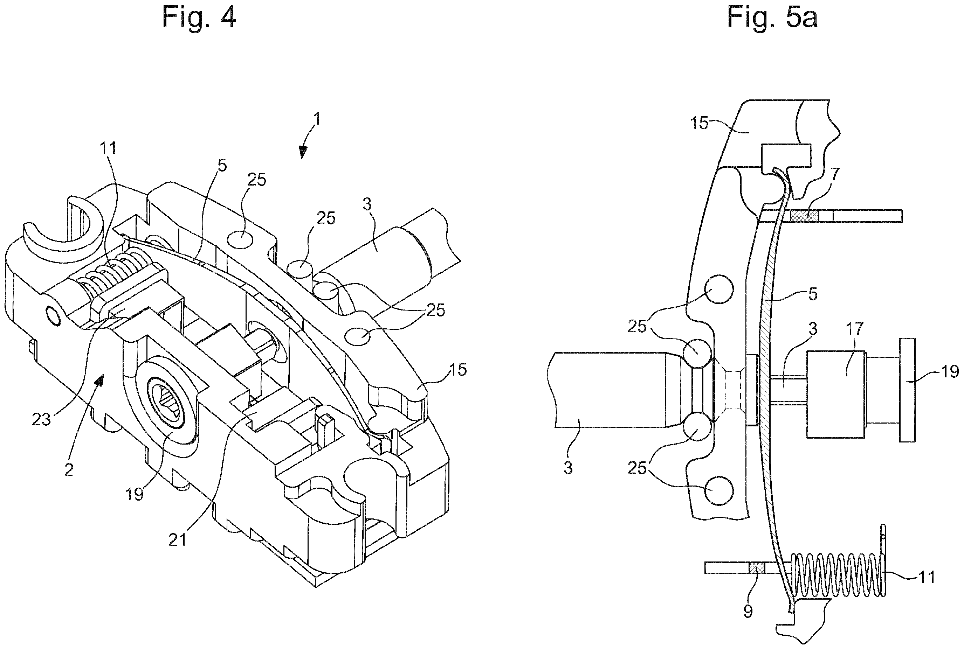

Deux ressorts 25 sont aussi prévus pour positionner axialement la tige 3. Ces deux ressorts sont mieux illustrés sur la figure 3. Pour son positionnement axial, la tige 3 comprend classiquement deux rainures transversales agencées pour s'engager avec ces deux ressorts qui exercent une pression transversale sur la tige. Ainsi, la tige peut occuper deux positions axiales stables. En amont des deux rainures, la tige présente une section tronconique pour favoriser la fonction poussoir prévue. Avantageusement, la tige 3 est retenue et donc guidée uniquement par le pignon coulant 17 et une carrure du boîtier de montre (non-illustrée). Cet aspect aide à minimiser l'encombrement de la solution proposée. La figure 4 illustre en vue isométrique le dispositif de commande 1 et en particulier le module de détection 2.

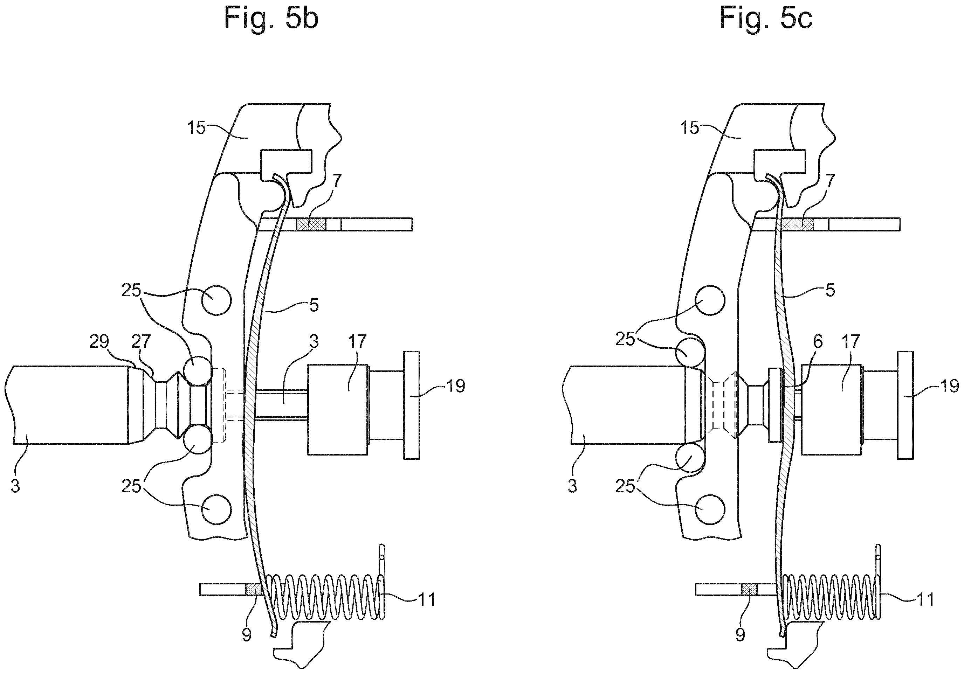

En se référant aux figures 5a à 5c, l'indexage de la tige 3 et le fonctionnement du module de détection 2 seront maintenant expliqués plus en détail. La tige 3 peut occuper trois positions principales axiales distinctes, notamment une première position stable illustrée sur la figure 5a, une deuxième position stable illustrée sur la figure 5b et une position terminale instable, également nommée 'position clic', qui est illustrée sur la figure 5c. Pour atteindre ces trois positions principales, la tige 3 passe classiquement par des positions secondaires instables. Dans cet exemple, la première position stable est une position intermédiaire ou position de repos, c'est-à-dire que cette position n'est liée à aucune fonction de la montre, alors que la deuxième position stable de la tige permet par exemple de manipuler des aiguilles de la montre. La position terminale correspond à une fonction poussoir pouvant être utilisée pour activer une fonction de la montre, telle qu'un chronographe ou l'affichage de la date.

Dans la position de repos, la tige 3 est positionnée / maintenue en place par les deux ressorts-tiges 25 insérés dans la première rainure de la tige. Dans cette position, la lame est peu déformée, seule une petite force du ressort de rappel 11 s'appliquant sur elle. En outre, dans cette position de repos, les premier et deuxième contacts électriques 7, 9 sont ouverts (pas en contact avec la lame 5).

Si, à partir de la position de repos, un utilisateur tire la tige 3 vers l'extérieur, c'est-à-dire fait reculer la tige, celle-ci atteint la deuxième position stable (position tirée), telle que montrée sur la figure 5b. Dans cette position, la tige 3 est positionnée / maintenue par les deux ressorts-tiges 25 insérés dans la deuxième rainure. La force mécanique exercée alors sur la lame dans cette position tirée est faible, mais non nulle pour assurer un contact avec le contact électrique 9. De manière à limiter la force de déformation sur la lame lorsque la tige recule à partir de la position de repos vers la position tirée, la lame pivote à sa première extrémité sous l'action du ressort de rappel 11 et vient finalement contacter le deuxième contact électrique 9. L'axe de pivotement se trouve à la première extrémité de la lame 5 qui comprend à cet endroit un coude. Ce coude est positionné entre une partie saillante du bâti sensiblement circulaire agencé à l'intérieur du coude et un sabot de manière à obtenir l'articulation souhaitée. Cet agencement particulier permet, d'une part, de maintenir latéralement la lame dans le bâti 15 et, d'autre part, son pivotement.

La position terminale de la tige peut être atteinte en poussant la tige vers l'intérieur de la montre en exerçant une force relativement importante sur elle. Comme illustré sur la figure 5c, dans la position terminale, il est prévu que la lame 5 vienne contacter le premier contact électrique 7, lequel est flexible afin de pouvoir absorber une certaine pression de la lame 5. Dans la position terminale, la deuxième extrémité de la lame 5 est en appui contre une butée du bâti et la lame 5 présente une relativement forte déformation élastique étant donné que sa partie centrale est pressée par l'épaulement 6 de la tige dans le sens défini de la position tirée vers la position terminale. La force de retour dans la position terminale est assurée par principalement par la lame 5 et secondairement par les ressorts-tiges 25. La sensation de clic est assurée par l'action des ressorts-tiges 25 sortant de la deuxième rainure de la tige 3. A cet effet la deuxième rainure comprend dans le sens susmentionné une double pente avec un tronçon raide 27 et un tronçon en pente douce 29 (visibles clairement sur la figure 5b). Pour obtenir une force de retour maximum dans un encombrement minimum, la lame 5 comporte des sections variables afin de distribuer les contraintes de manière la plus appropriée possible. En particulier il est prévu que la partie centrale présente la plus grande largeur de manière à ce qu'elle reste suffisamment rigide, la tige pressant sur cette partie centrale. Il est à noter que, dans l'exemple représenté, la lame ne pivote quasi pas entre la position de repos et la position terminale.

Pour résumer, le module de détection électronique 2 comprend donc la lame conductrice élastique courbée 5, agencée dans le bâti 15 du module de détection 2, et deux contacts électriques 7, 9 agencés de manière à venir en contact avec la lame conductrice respectivement dans la position tirée et la position terminale de la tige. Le premier contact électrique 7 est agencé du côté aval de la lame 5 relativement à un sens défini de la position tirée vers sa position terminale, alors que le deuxième contact électrique 9 est agencé du côté amont de celle-ci. Avantageusement la lame élastique courbe est montée de manière à pivoter à sa première extrémité lors d'un passage de la tige de la position de repos à la position tirée, et inversement. En particulier, ce pivotement est engendré par le ressort de rappel 11 alors que l'épaulement 6 de la tige se retire. De préférence, ce pivotement est effectué sensiblement sans déformation élastique de la lame 5, alors que la lame 5 est agencée de manière à subir une déformation élastique relativement importante lors du passage de la tige entre la position de repos et la position terminale, pour participer substantiellement à la force de rappel de cette tige vers la position de repos lors du relâchement de la force d'activation axiale exercée sur celle-ci par un utilisateur. Plus précisément, la lame comprend une première partie intermédiaire entre la partie centrale et la première extrémité et une deuxième partie intermédiaire entre la partie centrale et la deuxième extrémité, et dans lequel la lame présente une section transversale variable qui diminue depuis sa partie centrale en direction de sa première extrémité et également en direction de sa deuxième extrémité de manière à substantiellement concentrer la déformation élastique de la lame dans ses première et deuxième parties intermédiaires, situées respectivement entre la partie centrale et les deux extrémités, lors du passage de la tige entre la position intermédiaire et la position terminale. Avantageusement, la lame conductrice présente une section variable qui diminue depuis son centre en direction de ses deux extrémités de manière à permettre une relativement grande déformation des deux parties intermédiaires de cette lame 5 situées entre sa partie centrale et ses premières et deuxième extrémités.

La présente invention propose donc un module de détection électronique ayant une taille réduite, pour obtenir un moindre encombrement, tout en englobant des moyens de détection de trois positions axiales et des moyens de rappel efficace de la tige depuis sa position terminale, après un actionnement de celle-ci par un utilisateur pour la fonction poussoir, lors du relâchement de la force axiale exercée par cet utilisateur.

## Revendications

1. Un dispositif de commande comprenant une tige (3) actionnable par un utilisateur et un module de détection du type électrique (1) pour détecter plusieurs positions axiales distinctes de la tige, laquelle définit un axe longitudinal et est susceptible d'être déplacée axialement, le module de détection comprenant :
• une lame conductrice élastique (5) comprenant une première extrémité, une deuxième extrémité et une partie centrale entre les première et deuxième extrémités, cette lame étant agencée de manière que sa partie centrale est sensiblement perpendiculaire à l'axe longitudinal de la tige et susceptible d'être déplacée axialement par cette tige de manière à pouvoir occuper trois positions distinctes pour permettre de détecter respectivement une position tirée, une position terminale et une position intermédiaire, entre la position tirée et la position terminale, de la tige,
• un premier contact électrique (7) agencé de manière à venir en contact avec la lame (5) seulement dans la position terminale de la tige, et
• un deuxième contact électrique (9) agencé de manière à venir en contact avec la lame (5) seulement dans la position tirée de la tige ;
dans lequel la lame (5) est agencée pour pivoter à sa première extrémité lors d'un passage de la tige (3) de la position intermédiaire à la position tirée et inversement ; et dans lequel la lame (5) est agencée de manière à subir une déformation élastique lors du passage de la tige (3) entre la position intermédiaire et la position terminale, de sorte à participer substantiellement à une force de rappel de la tige (3) vers la position intermédiaire lors du relâchement d'une force d'actionnement axiale appliquée sur la tige (3) par un utilisateur.

2. Dispositif de commande selon la revendication 1, dans lequel la lame (5) présente une forme courbée en l'absence d'une force de déformation.

3. Dispositif de commande selon la revendication 2, dans lequel la lame (5) présente, en absence d'une force de déformation, sensiblement une forme d'arbalète, cette lame étant agencée dans le module de détection de manière que sa partie centrale dans un état non déformé est située, en projection sur l'axe longitudinal de la tige (3), du côté de la position tirée relativement à ses première et deuxième extrémités.

4. Dispositif de commande selon l'une quelconque des revendications précédentes, dans lequel la lame (5) comprend une première partie intermédiaire entre la partie centrale et la première extrémité, et une deuxième partie intermédiaire entre la partie centrale et la deuxième extrémité, et dans lequel la lame (5) présente une section transversale variable qui diminue depuis la partie centrale en direction de ses deux extrémités de manière à substantiellement concentrer la déformation élastique de la lame (5) dans les première et deuxième parties intermédiaires lors du passage de la tige (3) entre la position intermédiaire et la position terminale.

5. Dispositif de commande selon l'une quelconque des revendications précédentes, dans lequel le premier contact électrique (7) est agencé à la première extrémité de la lame (5) du côté aval de celle-ci relativement à un sens défini de la position tirée vers la position terminale.

6. Dispositif de commande selon l'une quelconque des revendications précédentes, dans lequel le deuxième contact électrique (9) est agencé à la deuxième extrémité de la lame (5) du côté amont de celle-ci relativement à un sens défini de la position tirée vers la position terminale.

7. Dispositif de commande selon l'une quelconque des revendications précédentes, dans lequel le module de détection comprend de plus un ressort de rappel (11) qui est engagé avec la deuxième extrémité de la lame (5) pour effectuer le pivotement de la lame (5).

8. Dispositif de commande selon la revendication 7, dans lequel le ressort de rappel (11) est agencé du côté aval de la deuxième extrémité de la lame relativement à un sens défini de la position tirée vers la position terminale.

9. Dispositif de commande selon la revendication 7 ou 8, dans lequel le ressort de rappel (11) est un conducteur électrique agencé pour imposer un potentiel électrique à la lame (5).

10. Dispositif de commande selon l'une quelconque des revendications précédentes, dans lequel le pivotement de la lame (5) entre la position intermédiaire et la position tirée est prévu sensiblement sans déformation élastique de cette lame.

11. Dispositif de commande selon l'une quelconque des revendications précédentes, dans lequel la lame (5) comprend un trou traversant sa partie centrale et dans lequel est insérée la tige (3), cette tige comprenant un épaulement (6) contre lequel bute la partie centrale de la lame (5) au moins lors d'un déplacement de la tige de sa position intermédiaire en direction de sa position terminale.

12. Une pièce d'horlogerie comprenant le dispositif de commande selon l'une quelconque des revendications précédentes et dans laquelle ladite tige (3) forme un organe de commande de plusieurs fonctions de la pièce d'horlogerie.

## Patentansprüche

1. Steuervorrichtung, umfassend einen durch einen Benutzer betätigbaren Federsteg (3) und ein Modul zur Detektion (1) vom elektrische Typ zum Detektieren mehrerer verschiedener axialer Positionen des Federstegs, der seinerseits eine Längsachse definiert und axial versetzbar ist, wobei das Modul zur Detektion umfasst:
- ein elastisches leitendes Blatt (5), das ein erstes Ende, ein zweites Ende und einen Mittelteil zwischen dem ersten und dem zweite Ende aufweist, wobei dieses Blatt so angeordnet ist, dass sein Mittelteil zu der Längsachse des Federstegs im Wesentlichen senkrecht ist und durch diesen Federsteg axial derart versetzbar ist, dass es drei verschiedene Positionen einnehmen kann, um eine ausgezogene Position, eine Endposition und eine Zwischenposition zwischen der ausgezogenen Position und der Endposition des Federstegs detektieren zu können,
- einen ersten elektrischen Kontakt (7), der so angeordnet ist, dass er mit dem Blatt (5) nur in der Endposition des Federstegs in Kontakt gelangt, und
- einen zweiten elektrischen Kontakt (9), der so angeordnet ist, dass er mit dem Blatt (5) nur in der ausgezogenen Position des Federstegs in Kontakt gelangt;
wobei das Blatt (5) so angeordnet ist, dass es bei einem Übergang des Federstegs (3) von der Zwischenposition in die ausgezogene Position und umgekehrt an seinem ersten Ende schwenkt; und wobei das Blatt (5) so angeordnet ist, dass es bei dem Übergang des Federstegs (3) zwischen der Zwischenposition und der Endposition eine elastische Verformung erfährt, so dass es wesentlich zu einer Rückstellkraft des Federstegs (3) in Richtung der Zwischenposition beiträgt, wenn die durch einen Benutzer auf den Federsteg (3) ausgeübte axiale Betätigungskraft verringert wird.

2. Steuervorrichtung nach Anspruch 1, wobei das Blatt (5) bei Abwesenheit einer Verformungskraft eine gekrümmte Form aufweist.

3. Steuervorrichtung nach Anspruch 2, wobei das Blatt (5) bei Abwesenheit einer Verformungskraft im Wesentlichen die Form einer Armbrust aufweist, wobei dieses Blatt in dem Modul zur Detektion so angeordnet ist, dass sich sein Mittelteil in einem nicht verformten Zustand in der Projektion auf die Längsachse des Federstegs (3) von der Seite der ausgezogenen Position relativ zu seinem ersten und seinem zweiten Ende befindet.

4. Steuervorrichtung nach einem der vorhergehenden Ansprüche, wobei das Blatt (5) einen ersten Zwischenteil zwischen dem Mittelteil und dem ersten Ende und einen zweiten Zwischenteil zwischen dem Mittelteil und dem zweiten Ende aufweist, wobei das Blatt (5) einen veränderlichen Querschnitt aufweist, der von dem Mittelteil in Richtung seiner beiden Enden abnimmt, derart, dass die elastische Verformung des Blatts (5) im Wesentlichen in dem ersten und in dem zweiten Zwischenteil konzentriert wird, wenn sich der Federsteg (3) zwischen der Zwischenposition und der Endposition bewegt.

5. Steuervorrichtung nach einem der vorhergehenden Ansprüche, wobei der erste elektrische Kontakt (7) stromabseitig des ersten Endes des Blatts (5) in Bezug auf eine von der ausgezogenen Position zu der Endposition definierten Richtung angeordnet ist.

6. Steuervorrichtung nach einem der vorhergehenden Ansprüche, wobei der zweite elektrische Kontakt (9) stromaufseitig des zweiten Endes des Blatts (5) in Bezug auf eine von der ausgezogenen Position zu der Endposition definierten Richtung angeordnet ist.

7. Steuervorrichtung nach einem der vorhergehenden Ansprüche, wobei das Modul zur Detektion ferner eine Rückstellfeder (11) umfasst, die mit dem zweiten Ende des Blatts (5) in Eingriff ist, um das Schwenken des Blatts (5) zu bewirken.

8. Steuervorrichtung nach Anspruch 7, wobei die Rückstellfeder (11) stromabseitig des zweiten Endes des Blatts in Bezug auf eine von der ausgezogenen Position zu der Endposition definierten Richtung angeordnet ist.

9. Steuervorrichtung nach Anspruch 7 oder 8, wobei die Rückstellfeder (11) ein elektrischer Leiter ist, der dazu vorgesehen ist, an das Blatt (5) ein elektrisches Potential anzulegen.

10. Steuervorrichtung nach einem der vorhergehenden Ansprüche, wobei das Schwenken des Blatts (5) zwischen der Zwischenposition und der ausgezogenen Position im Wesentlichen ohne elastische Verformung dieses Blatts erfolgt.

11. Steuervorrichtung nach einem der vorhergehenden Ansprüche, wobei das Blatt (5) in seinem Mittelteil ein Durchgangsloch aufweist, in das der Federsteg (3) eingesetzt ist, wobei dieser Federsteg eine Schulter (6) aufweist, an der der Mittelteil des Blatts (5) mindestens bei einer Lageänderung des Federstegs von seiner Zwischenposition in Richtung seiner Endposition anliegt.

12. Uhr, die die Steuervorrichtung nach einem der vorhergehenden Ansprüche umfasst und in der der Federsteg (3) ein für mehrere Funktionen vorgesehenes Betätigungsorgan der Uhr bildet.

## Claims

1. A control device comprising a user-actuatable rod (3) and a detection module (1) of the electric type for detecting a plurality of distinct axial positions of the rod, which defines a longitudinal axis and can be displaced axially, with the detection module comprising:
• an elastic conductive blade (5) comprising a first end, a second end, and a central portion between the first and second ends, with this blade being embodied such that its central portion is substantially perpendicular to the longitudinal axis of the rod and can be displaced axially by this rod so that it can occupy three distinct positions in order to enable detection of a pulled position, an end position, and an intermediate position of the rod, respectively, between the pulled position and the end position,
• a first electrical contact (7) that is designed to come into contact with the blade (5) only when the rod is in the end position, and
• a second electrical contact (9) that is designed to come into contact with the blade (5) only when the rod is in the pulled position;
wherein the blade (5) is designed to pivot at its first end when the rod (3) passes from the intermediate position to the pulled position and vice versa; and wherein the blade (5) is designed to undergo elastic deformation when the rod (3) passes between the intermediate position and the end position so as to participate substantially in a restoring force of the rod (3) toward the intermediate position when an axial actuating force applied to the rod (3) by a user is released.

2. The control device as set forth in claim 1, wherein the blade (5) has a curved shape in the absence of a deformation force.

3. The control device as set forth in claim 2, wherein, in the absence of a deformation force, the blade (5) has substantially the shape of a crossbow and, in a non-deformed state, its central portion is situated in projection on the longitudinal axis of the rod (3) to the side of the pulled position relative to its first and second ends.

4. The control device as set forth in any one of the preceding claims, wherein the blade (5) comprises a first intermediate portion between the central portion and the first end and a second intermediate portion between the central portion and the second end, and wherein the blade (5) has a variable cross section that decreases from its central portion toward its two ends, so that the elastic deformation of the blade (5) is concentrated substantially in its first and second intermediate parts when the rod (3) passes between the intermediate position and the end position.

5. The control device as set forth in any one of the preceding claims, wherein the first electrical contact (7) is arranged at the first end of the blade (5) on the downstream side thereof relative to a defined direction from the pulled position toward the end position.

6. The control device as set forth in any one of the preceding claims, wherein the second electrical contact (9) is arranged at the second end of the blade (5) on the upstream side thereof relative to a defined direction from the pulled position toward the end position.

7. The control device as set forth in any one of the preceding claims, wherein the detection module further comprises a return spring (11) that is engaged with the second end of the blade (5) in order to bring about the pivoting of the blade (5).

8. The control device as set forth in claim 7, wherein the return spring (11) is arranged on the downstream side of the second end of the blade relative to a defined direction from the pulled position toward the end position.

9. The control device as set forth in claim 7 or 8, wherein the return spring (11) is an electrical conductor that is designed to apply an electric potential on the blade (5).

10. The control device as set forth in any one of the preceding claims, wherein the pivoting of the blade (5) between the intermediate position and the pulled position is performed substantially without elastic deformation of this blade.

11. The control device as set forth in any one of the preceding claims, wherein the blade (5) comprises a hole that passes through its central portion and into which the rod (3) is inserted, with this rod comprising a shoulder (6) against which the central blade (5) abuts at least when the rod is displaced from its intermediate position toward its end position.

12. A timepiece comprising the control device as set forth in any one of the preceding claims and wherein the rod (3) constitutes a control member for several functions of the timepiece.
